# EUROPÄISCHE PATENTSCHRIFT

(11) **EP 2 550 177 B1**
(45) Veröffentlichungstag und Bekanntmachung des Hinweises auf die Patenterteilung: **25.04.2018**
(21) Anmeldenummer: 10794871.3
(22) Anmeldetag: 04.12.2010
(51) Int. Cl.: B60N 2/225, F16C 33/08, F16C 35/02

(54) **VERFAHREN ZUR HERSTELLUNG EINES FAHRZEUGSITZ-BESCHLAGS**
METHOD FOR PRODUCING A VEHICLE SEAT FITTING
PROCÉDÉ DE FABRICATION D'UNE FERRURE POUR SIÈGE DE VÉHICULE

(30) Priorität: 22.03.2010 DE 102010013091
(43) Veröffentlichungstag der Anmeldung: 30.01.2013
(73) Patentinhaber: Adient Luxembourg Holding S.à r.l., 1855 Luxembourg (LU)
(72) Erfinder: JOKIEL, Christian, 42579 Heiligenhaus (DE); LEHMANN, Ulrich, 53347 Alfter (DE)
(74) Vertreter: Loock, Jan Pieter
(86) Internationale Anmeldenummer: PCT/EP2010/007375
(87) Internationale Veröffentlichungsnummer: WO 2011/116799

(56) Entgegenhaltungen:
- EP-A2- 0 098 400
- DE-A1- 2 724 047
- DE-A1- 4 411 214
- DE-U1-202009 007 520
- US-A- 4 134 175
- US-A1- 2005 091 829

## Beschreibung

Die Erfindung betrifft ein Verfahren zur Herstellung eines Fahrzeugsitz-Beschlags mit den Merkmalen des Oberbegriffs des Anspruches 1.

In der DE 44 11 214 C2 wird beschrieben, wie die Gleitlagerbuchse in die Aufnahme des ersten Beschlagteils eingebracht wird. Hierzu wird in einem ersten Schritt das erste Beschlagteil in einem Halter eines Werkzeugs befestigt und die Gleitlagerbuchse auf einen Dorn des Werkzeugs gesetzt. In einem zweiten Schritt wird durch eine Relativbewegung von Dorn und Halter die Gleitlagerbuchse in die Aufnahme des ersten Beschlagteils eingepresst. Die Außenabmessung der Gleitlagerbuchse ist im Rahmen einer Presspassung etwas größer als die Innenabmessung der Aufnahme des ersten Beschlagteils gewählt, so dass Material verdrängt wird, welches sich an dem - bezüglich der Bewegung des Dorns - nacheilenden Ende der Gleitlagerbuchse ansammelt und als Axialsicherung dient.

Die Druckschrift EP 0 0098 400 A2 offenbart eine Stellvorrichtung für Kraftfahrzeugsitze mit einer an einem Gelenkbeschlag befestigten Gleitlagerbuchse, in welcher eine Übertragungswelle drehbar gelagert ist.

Ferner ist aus der Druckschrift DE 27 24 047 A1 ein Kraftfahrzeugsitz mit einer neigungsverstellbaren Rücklehne bekannt, wobei ein Gelenkbeschlag einen festen mit einem Sitzteil verbundenen Gelenkteil und einen schwenkbaren mit der Rückenlehne verbundenen Gelenkteil umfasst. Ein zentrischer Abschnitt einer Schwenkachse des Gelenkbeschlags ist dabei in einer Hülse drehbar gelagert. Zuletzt ist aus der US amerikanischen Patentschrift US 4,134, 175 eine Lagerbuchse bekannt.
Der Erfindung liegt die Aufgabe zu Grunde, ein Verfahren der eingangs genannten Art zu verbessern. Diese Aufgabe wird erfindungsgemäß durch einen Beschlag mit den Merkmalen der Ansprüche 1 oder 3 gelöst. Vorteilhafte Ausgestaltungen sind Gegenstand der Unteransprüche.

Die Ausbildung eines Sicherungsbereichs der Gleitlagerbuchse, welcher als Axialsicherung gegen ein Verschieben der Gleitlagerbuchse in axialer Richtung (vom zweiten Beschlagteil weg) wirkt, wobei der Sicherungsbereich nach dem Einpressen ausgebildet wird, hat den Vorteil, dass eine solche Axialsicherung nicht durch das Einpressen geschaffen werden muss, also toleranzunabhängiger wird. Radiale Überschneidungen der etwas größeren Gleitlagerbuchse und der etwas kleineren Aufnahme des ersten Beschlagteils können gering gehalten werden. Dies verringert den Kraftaufwand beim Einpressen.

Die Ausbildung des Zahnkranzes an dem den Exzenter aufnehmenden ersten Beschlagteil und die Ausbildung des Zahnrades an dem den Exzenter abstützenden zweiten Beschlagteil spart Material und Bauraum, indem das Zahnrad am radial äußeren Rand des zweiten Beschlagteils ausgebildet werden kann (welches dann vorzugsweise ein am ersten Beschlagteil befestigter Umklammerungsring übergreift) und trotzdem ausreichend große Verbindungsbereiche am zweiten Beschlagteil zur Montage des Beschlags zur Verfügung stehen. Das Zahnrad am radial äußeren Rand des zweiten Beschlagteils wird dann vorzugsweise von einem am ersten Beschlagteil befestigten Umklammerungsring übergriffen. Die im wesentlichen flache Form des Umklammerungsrings benötigt gegenüber der bekannten L-förmig profilierten Ausbildung weniger Material, was zu einer Einsparung von Gewicht und Kosten führt.

Die Ausbildung der - gegenüber dem Zahnkranz separaten - Verzahnung an dem den Exzenter aufnehmenden ersten Beschlagteil erlaubt die Übernahme des Konzepts, den Exzenter im nicht-angetriebenen Zustand des Beschlags zu sperren, wie es aus der DE 195 48 809 C1 bekannt ist. Ohne das dort offenbarte Sperrelement würde es unter dynamischen Betriebsbedingungen, d.h. während der Fahrt, durch Rütteln und Stoßen zu Bewegungen der Keilsegmente kommen, was wiederum zu einer Relativbewegung der Beschlagteile führen könnte, dem sogenannten "Ablaufen". Das Sperrelement verhindert das Ablaufen, indem es einerseits mittels der Ränder von an ihm ausgebildeten Öffnungen und mittels Endfinger einer die Keilsegmente beaufschlagenden Feder die Keilsegmente festhält und andererseits mittels an ihm ausgebildeter Rastnasen mit einem der Beschlagteile zusammenwirkt.

Beim Prägen des Zahnkranzes entsteht auf dessen Kehrseite eine nach außen weisende Gegenverzahnung. Die vom Zahnkranz separate Ausbildung der Verzahnung ermöglicht eine bauraumsparende Anpassung der Geometrien von Sperrelement und Verzahnung.

Das Sperrelement weist vorzugsweise eine Ringform auf, beispielsweise aus zwei Bögen, und sitzt vorzugsweise auf einem Überstand einer Gleitlagerbuchse, mittels welcher das erste Beschlagteil den Exzenter aufnimmt. Entsprechende Federarme sorgen für einen Kraftschluss. Optional können Führungsabschnitte vorgesehen sein, welche die Lagerung auf dem Überstand verbessern. Eine einstückige Ausbildung aus Federstahl ermöglicht eine einfache Integration der Merkmale des Sperrelementes. Zum Zusammenwirken mit der Verzahnung des ersten Beschlagteils, welche vorzugsweise als Zahnkranz mit radial nach innen weisenden Zähnen ausgebildet ist, sind vorzugsweise Sperrnasen vorgesehen, die radial nach außen weisen. Zum Zusammenwirken mit dem Exzenter sind vorzugsweise Öffnungen vorgesehen, welche die Feder des vorzugsweise aus zwei Keilsegmenten bestehenden Exzenters durchdringt. Zum Zusammenwirken mit dem Mitnehmer sind vorzugsweise Stützfinger vorgesehen, welche der Mitnehmer mittels Anschlägen beaufschlagen kann.

Gegenüber Lösungen, bei denen das Sperrelement mit Verzahnungen an der Gleitlagerbuchse (DE 10 2007 010 078 B4) oder an einem Kragen der von der Gleitlagerbuchse ausgekleideten Aufnahme zusammenwirkt, besteht vorliegend der Vorteil, dass ein größerer Radius der Verzahnung einen größeren Hebelarm für das Sperrmoment definiert.

Das Sperrelement dient vorrangig dem Sperren des Beschlags unter dynamischen Belastungen. Der Grundanteil beim Sperren wird durch die Reibung zwischen dem Exzenter und einem der beiden Beschlagteile aufgebracht, vorzugsweise dem zweiten Beschlagteil, welches vorzugsweise einen Kragen zum Abstützen des Exzenters aufweist. Die vorzugsweise vorgesehenen Keilsegmente, welche den Exzenter definieren, dienen sowohl dem Sperren als auch dem Antreiben der Abwälzbewegung von Zahnrad und Zahnkranz.

Die Verwendung eines Exzenterumlaufgetriebes erlaubt eine stufenlose Neigungseinstellung der Lehne. Die Einsparung eines zentralen Ritzels gegenüber einem Planetenumlaufgetriebe führt zur Entstehung einer Taumelbewegung, die der relativen Drehung der Beschlagteile überlagert ist. Das Exzenterumlaufgetriebe kann manuell oder motorisch angetrieben werden.

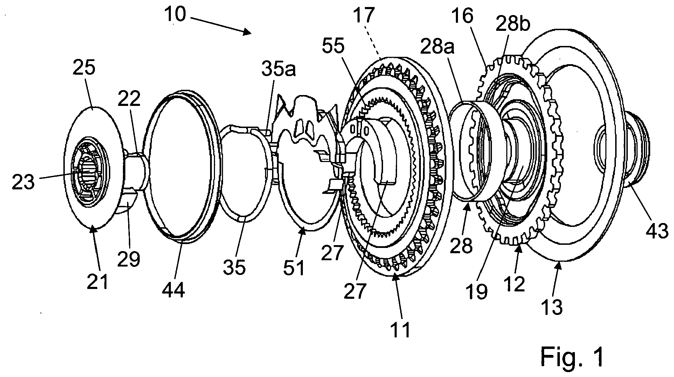

Im folgenden ist die Erfindung anhand eines in der Zeichnung dargestellten Ausführungsbeispiels näher erläutert. Es zeigen
- Fig. 1: eine Explosionsdarstellung des Beschlags,

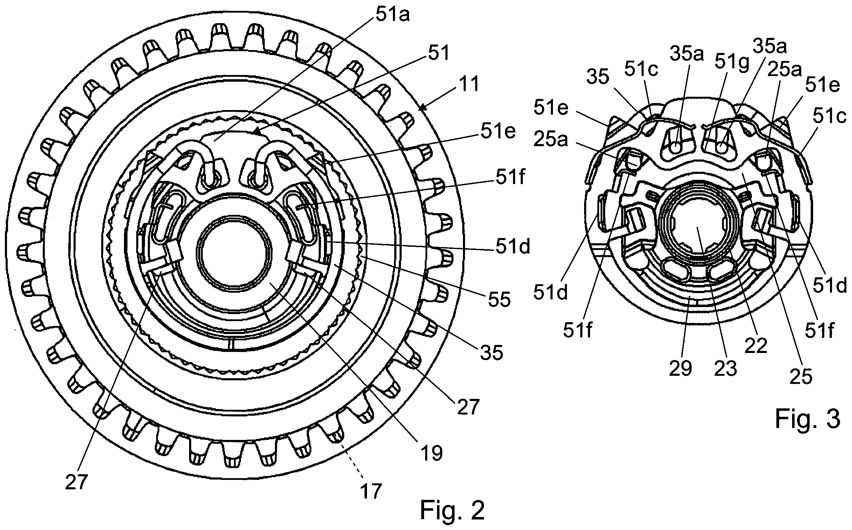

- Fig. 2: eine Teilansicht des Beschlags ohne Mitnehmer,
- Fig. 3: eine Ansicht von Mitnehmer, Feder und Sperrelement aus der entgegengesetzten Richtung zu Fig. 2,

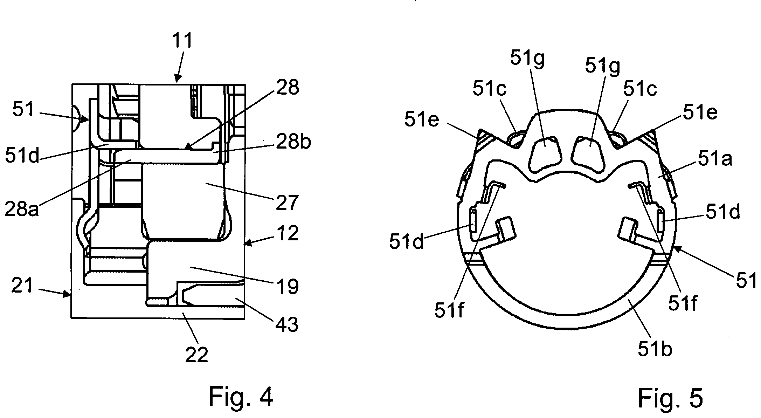

- Fig. 4: einen Teilschnitt durch den Beschlag,
- Fig. 5: eine Ansicht des Sperrelementes,

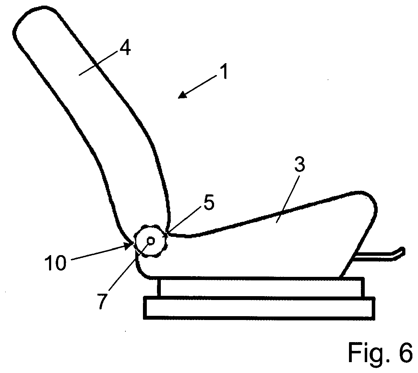

- Fig. 6: eine schematische Darstellung eines Fahrzeugsitzes,
- Fig. 7: einen Teilschnitt mit einer eingepressten Gleitlagerbuchse vor der Ausbildung ihres Sicherungsbereich am voreilenden Ende,
- Fig. 8: der Teilschnitt von Fig. 7 nach Ausbildung des Sicherungsbereichs, welcher in einer Vertiefung des ersten Beschlagteils angeordnet ist,
- Fig. 9: einen Teilschnitt entsprechend Fig. 8 mit einem Schnittelement am Stempel,
- Fig. 10: einen Teilschnitt mit einer Gleitlagerbuchse, deren Sicherungsbereich am nacheilenden Ende mittels eines Schnittelementes entsteht,
- Fig. 11: einen Teilschnitt mit einer Gleitlagerbuchse, deren Sicherungsbereich vorgebildet ist, und
- Fig. 12: einen Teilschnitt mit einer Gleitlagerbuchse, deren Sicherungsbereich auf einer Stirnseite des ersten Beschlagteils aufliegt.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handrades 5, oder motorisch, beispielsweise mittels eines Elektromotors, eine Antriebswelle 7 gedreht, welche horizontal im Übergangsbereich zwischen Sitzteil 3 und Lehne 4 angeordnet ist. Auf beiden Seiten des Fahrzeugsitzes 1 greift die Antriebswelle 7 drehfest in jeweils einen Beschlag 10 ein. Die Antriebswelle 7 definiert die verwendeten Richtungsangaben eines Zylinderkoordinatensystems.

Der Beschlag 10 weist ein erstes Beschlagteil 11 und ein zweites Beschlagteil 12 auf, welche relativ zueinander verdrehbar sind. Die beiden Beschlagteile 11 und 12 lassen sich jeweils näherungsweise in eine kreisrunde Scheibenform einbeschreiben. Zur Aufnahme der axial wirkenden Kräfte, also zum Zusammenhalt der Beschlagteile 11 und 12, ist ein Umklammerungsring 13 vorgesehen. Ein solcher Zusammenhalt mittels eines Umklammerungsrings ist beispielsweise in der US 6,799,806 A beschrieben. Der vorzugsweise metallische Umklammerungsring 13 ist fest mit einem der beiden Beschlagteile 11 und 12 verbunden, vorliegend dem ersten Beschlagteil 11 in einem äußeren Randabschnitt, beispielsweise verschweißt oder umgebördelt. Mittels eines radial nach innen weisenden Randes übergreift der Umklammerungsring 13, gegebenenfalls unter Zwischenlage eines separaten Gleitrings, das relativ zu ihm bewegliche, andere der beiden Beschlagteile 11 und 12 radial außen, ohne die Relativdrehung der beiden Beschlagteile 11 und 12 zu behindern. In baulicher Hinsicht bilden die beiden Beschlagteile 11 und 12 daher zusammen (mit dem Umklammerungsring 13) eine scheibenförmige Einheit.

Mit der Montage des Beschlags 10 ist das erste Beschlagteil 11 beispielsweise fest mit der Struktur der Lehne 4 verbunden, also lehnenteilfest. Das zweite Beschlagteil 12 ist dann fest mit der Struktur des Sitzteils 3 verbunden, also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Der Beschlag 10 liegt also im Kraftfluss zwischen Lehne 4 und Sitzteil 3, weshalb die beide Beschlagteile 11 und 12 aus Metall bestehen, vorzugsweise aus Stahl.

Der Beschlag 10 ist als Getriebebeschlag ausgebildet, bei welchem das erste Beschlagteil 11 und das zweite Beschlagteil 12 mittels eines Getriebes zum Verstellen und Feststellen miteinander verbunden sind, genauer gesagt mittels eines - vorliegend selbsthemmenden - Exzenterumlaufgetriebes, wie es beispielsweise in der DE 44 36 101 A1 beschrieben ist.

Zur Ausbildung des Getriebes ist am zweiten Beschlagteil 12 ein außenverzahntes Zahnrad 16 und am ersten Beschlagteil 11 ein innenverzahnter Zahnkranz 17 ausgebildet, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Ein entsprechender Unterschied der Zähneanzahl von Zahnrad 16 und Zahnkranz 17 von wenigstens einem Zahn ermöglicht eine Abwälzbewegung des Zahnkranzes 17 am Zahnrad 16. Die Ausbildung von Zahnrad 16 und Zahnkranz 17 erfolgt vorzugsweise mittels eines einzigen Präge-Stanz-Vorgangs, der zugleich die Beschlagteile 11 und 12 aus ihrem Ausgangsmaterial ausstanzt. Vorliegend bildet das Zahnrad 16 den radial äußeren Rand des zweiten Beschlagteils 12, d.h. das zweite Beschlagteil 12 schließt radial außen mit dem Zahnrad 16 ab.

Eines der beiden Beschlagteile 11 und 12 weist einen Kragen 19 auf, vorliegend das zweite Beschlagteil 12 konzentrisch zum Zahnrad 16. Der Kragen 19 kann als Kragenzug an dem besagten Beschlagteil angeformt (d.h. einstückig ausgebildet) oder als separate Hülse daran befestigt sein. Im Kragen 19 ist ein Mitnehmer 21 mittels einer Nabe 22 drehbar gelagert. Der Mitnehmer 21 besteht vorzugsweise aus Kunststoff. Die Nabe 22 des Mitnehmers 21 ist zentral mit einer Bohrung 23 zur Aufnahme der Antriebswelle 7 versehen. Das Profil der Bohrung 23 ist passend zum Profil der Antriebswelle 7, vorliegend einem Keilwellenprofil, ausgebildet. Im Anschluss an seine Nabe 22 weist der Mitnehmer 21 eine einstückig mit der Nabe 22 ausgebildete Abdeckscheibe 25 mit größerem Durchmesser als die Nabe 22 auf.

Auf dem Kragen 19 sind zwei Keilsegmente 27 - mit ihren gekrümmten Innenflächen - abgestützt, die - mit ihren gekrümmten Außenflächen - das andere der beiden Beschlagteile 11 und 12, vorliegend das erste Beschlagteil 11, lagern. Hierfür ist eine Aufnahme des letztgenannten Beschlagteils mit einer vorzugsweise drehfest eingepressten Gleitlagerbuchse 28 ausgekleidet, an der die Außenflächen der Keilsegmente 27 anliegen. Die Begriffe "abstützen" und "lagern" sollen nicht auf eine bestimmte Richtung des Kraftflusses durch den Beschlag 10 beschränkt sein, da diese Richtung von der Montage des Beschlags 10 abhängt.

Der Mitnehmer 21 weist - radial beabstandet zur Nabe 22 - ein mit Spiel zwischen die Schmalseiten der Keilsegmente 27 fassendes Mitnehmersegment 29 auf, welches mit der Abdeckscheibe 25 und mit der Nabe 22 einstückig ausgebildet ist. Die Keilsegmente 27, deren Breitseiten einander zugekehrt sind, nehmen, beispielsweise mit je einer durch vorspringende Materialpartien definierten Ausnehmung, jeweils einen abgewinkelten Endfinger 35a einer Omega-förmigen Feder 35 auf. Die Feder 35 beaufschlagt die Keilsegmente 27 in Umfangsrichtung, insbesondere um sie auseinander zu drücken, wobei im Betrieb die Breitseiten der Keilsegmente 27 einander berühren und beaufschlagen können.

Der Mitnehmer 21 wird auf der Außenseite des den Kragen 19 aufweisenden Beschlagteils durch einen vorzugsweise aufgeclipsten Sicherungsring 43 axial gesichert. Auf der Außenseite des die Gleitlagerbuchse 28 aufweisenden Beschlagteils (vorliegend des ersten Beschlagteils 11) ist zwischen dessen radial äußerem Rand und der Abdeckscheibe 25 ein Dichtring 44 vorgesehen, beispielsweise aus Gummi oder weichem Kunststoff, der mit der Abdeckscheibe 25 verbunden ist, insbesondere verclipst ist.

Durch die Keilsegmente 27 (und die Feder 35) wird ein Exzenter definiert, welcher in Verlängerung der Richtung der Exzentrizität das Zahnrad 16 an einer Eingriffsstelle in den Zahnkranz 17 drückt. Bei einem Antrieb durch die sich (mehrfach) drehende Antriebswelle 7 wird ein Drehmoment zunächst auf den Mitnehmer 21 und mittels des Mitnehmersegments 29 dann auf den so definierten Exzenter übertragen, welcher entlang der Gleitlagerbuchse 28 gleitet unter Verlagerung der Richtung der Exzentrizität und damit unter Verlagerung der Eingriffsstelle des Zahnrades 16 im Zahnkranz 17, was sich als taumelnde Abwälzbewegung darstellt, d.h. als Relativdrehung mit überlagerter Taumelbewegung. Die Neigung der Lehne 4 ist dadurch zwischen mehreren Gebrauchsstellungen stufenlos einstellbar.

Zur Verbesserung des dynamischen Betriebsverhaltens ist noch als Sperrelement eine Sperrfeder 51 vorgesehen, wie sie beispielsweise in der DE 195 48 809 C1 offenbart ist. Die Sperrfeder 51 ist vorliegend einstückig aus Federstahl ausgebildet.

Die im wesentlichen ringförmige Sperrfeder 51 weist einen Grundbogen 51a, welcher in einer Ebene parallel zum ersten Beschlagteil 11 angeordnet ist, und einen Lagerbogen 51b, welcher in einer zum Grundbogen 51a versetzten Ebene angeordnet ist und sich beidseitig mittels jeweils einer Abkröpfung an den Grundbogen 51a unter Bildung der Ringform anschließt. Zwei Federarme 51c sind mit ihren freien Enden einander zugewandt und mit den von einander abgewandten Enden am Grundbogen 51a angeformt. Während der Grundbogen 51a und der Lagerbogen 51b größtenteils innerhalb der besagten beiden Ebenen in Umfangs- und in radialer Richtung liegen, erstrecken sich die beiden Federarme 51c in axialer Richtung zwischen den besagten beiden Ebenen. Vom Grundbogen 51a stehen optional zwei umgebogene, zylindrisch gekrümmte Führungabschnitte 51d ab, welche sich ebenfalls in axialer Richtung zwischen den besagten beiden Ebenen erstrecken. Schließlich weist die Sperrfeder 51 noch zwei Sperrnasen 51e auf, welche vom Grundbogen 51a radial (nach außen) abstehen, zwei Stützfinger 51f, welche vom Grundbogen 51a (oder alternativ vom Lagerbogen 51b) axial abstehen, und zwei Öffnungen 51g, welche im Grundbogen 51a ausgebildet sind.

Die Gleitlagerbuchse 28 weist vorliegend eine größere axiale Abmessung als die von ihr ausgekleidete Aufnahme auf, so dass sie in axialer Richtung über das ihr zugeordnete Beschlagteil, also vorliegend das erste Beschlagteil 11, übersteht, was einen Überstand 28a definiert. Die Sperrfeder 51 stützt sich an dem Überstand 28a der Gleitlagerbuchse 28 ab, indem einerseits der Lagerbogen 51b und, falls vorhanden, die Führungsabschnitte 51d am Überstand 28a der Gleitlagerbuchse 28 anliegen, und andererseits auf der dem Lagerbogen 51b radial gegenüberliegenden Seite die Federarme 51c gegen den Überstand 28a der Gleitlagerbuchse 28 gespannt sind. Die Endfinger 35a der Feder 35 durchdringen die Öffnungen 51g.

Die Sperrfeder 51 wirkt mit einer zur Gleitlagerbuchse 28 konzentrischen und radial außerhalb derselben angeordneten Verzahnung 55 am ersten Beschlagteil 11 zusammen, deren Zähne radial nach innen weisen, d.h. die als weiterer Zahnkranz ausgebildet ist, vorliegend auf der Kehrseite des Zahnkranzes 17 und konzentrisch zu diesem. Die Sperrfeder 51 sperrt die Keilsegmente 27 im nicht-angetriebenen Zustand des Beschlags 10, indem die Sperrnasen in Eingriff mit der Verzahnung 55 stehen. Eine Bewegung der Keilsegmente 27 wird durch eine Anlage der Endfinger 35a der Feder 35 an die Ränder der jeweiligen Öffnungen 51g verhindert. Da die Öffnungen 51g größer als der Querschnitt der Endfinger 35a sind, erfolgt die Anlage erst nach einer - von den Toleranzen abhängigen - geringfügigen Bewegung wenigstens eines der Keilsegmente 27, d.h. nach einer geringfügigen Drehung des Exzenters.

Die Sperrfeder 51 wird durch den angetriebenen Mitnehmer 21 gelöst, indem dieser mittels eines Aussteuernockens 25a, welcher vorzugsweise an der Abdeckscheibe 25 ausgebildet ist, in Anlage an einen der Stützfinger 51f gelangt, wobei für jede Drehrichtung jeweils ein Aussteuernocken 25a und ein Stützfinger 51f vorgesehen sind. Wenn der Mitnehmer 21 den Stützfinger 51f beaufschlagt, beginnt er die Sperrnasen 51e aus der Verzahnung 55 zu ziehen, und zwar radial nach innen. Die auf der Gleitlagerbuchse 28 drehbar gelagerte Sperrfeder 51 dreht sich dann mit dem Mitnehmer 21 mit. Die von einander abgewandten Ränder der Öffnungen 51g verlaufen schräg zur radialen Richtung. Sobald der nacheilend angeordnete Endfinger 35a an den nacheilend angeordneten, schrägen Rand der zugeordneten Öffnung 51g gelangt, bewegt sich der Bereich der Sperrfeder 51 mit den Sperrnasen 51e, also der Grundbogen 51a, radial weiter nach innen. Die Sperrnasen 51e und die Verzahnung 55 kommen dann vollständig außer Eingriff. Zeitgleich oder danach kommt das Mitnehmersegment 29 in Anlage an das nacheilende der beiden Keilsegmente 27, worauf der Exzenter beginnt, sich zu drehen (umzulaufen). Wird der Mitnehmer 21 gestoppt, so bringen die Federarme 51c die Sperrnasen 51e wieder in Eingriff mit der Verzahnung 55, so dass die Keilsegmente 27 wieder gesperrt sind.

Die Gleitlagerbuchse 28 weist an dem vom Überstand 28a abgewandten Ende einen radial vorstehenden Sicherungsbereich 28b auf, welcher als Axialsicherung gegen ein Verschieben der Gleitlagerbuchse 28 in axialer Richtung vom zweiten Beschlagteil 12 weg wirkt. In axialer Richtung auf das zweite Beschlagteil 12 zu wirkt letzteres als Axialsicherung gegen ein Verschieben der Gleitlagerbuchse 28. Zur Einbringung der Gleitlagerbuchse 28 in die Aufnahme des ersten Beschlagteils 11 wird in einem ersten Schritt das erste Beschlagteil 11 auf einen Halter H eines Werkzeugs aufgelegt und vorzentriert und die Gleitlagerbuchse 28 auf einen Dorn D des Werkzeugs gesetzt. In einem zweiten Schritt wird durch eine Relativbewegung von Dorn D und (dem das erste Beschlagteil 11 aufnehmenden) Halter H die Gleitlagerbuchse 28 in die Aufnahme des ersten Beschlagteils eingepresst. Die Außenabmessung der Gleitlagerbuchse 28 ist im Rahmen einer Presspassung gleich oder vorzugsweise (zum Toleranzausgleich) etwas größer als die Innenabmessung der Aufnahme des ersten Beschlagteils 11 gewählt, so dass diese Presspassung die Axialsicherung unterstützt. Das Material des ersten Beschlagteils 11 ist aufgrund eines zuvor durchgeführten Härtungsvorgangs vorzugsweise härter als das Material der Gleitlagerbuchse 28. Eventuell überschüssiges Material, welches aufgrund der Unterschiede der Abmessung beim Einpressen verdrängt wird, sammelt sich an dem - bezüglich der Bewegung des Dorns D - nacheilenden Ende der Gleitlagerbuchse 28 an.

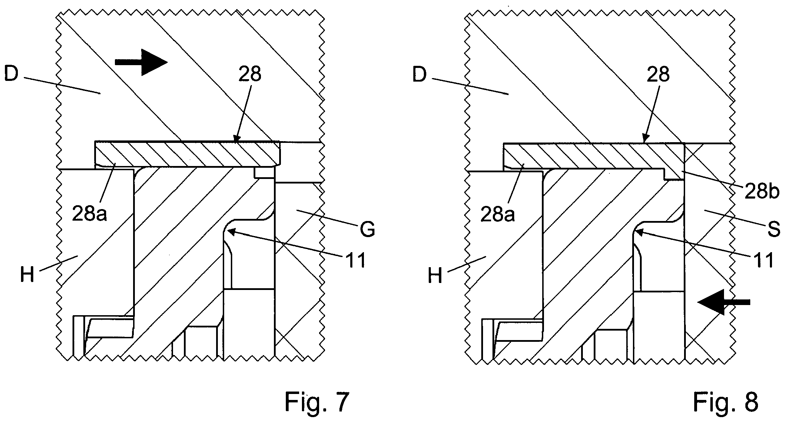

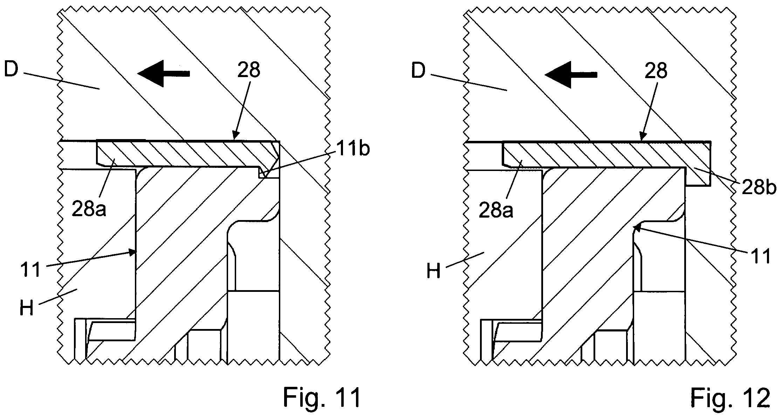

Um den Sicherungsbereich 28b herzustellen, existieren mehrere Möglichkeiten. Dabei kann der hergestellte Sicherungsbereich 28b in einer ringförmigen Vertiefung 11b des ersten Beschlagteils 11 um die Aufnahme für die Gleitlagerbuchse 28 herum angeordnet werden (Fig. 8, 9, 10, 11), oder er kann auf der Stirnfläche des ersten Beschlagteils 11 aufliegen (Fig. 12), d.h. axial überstehen.

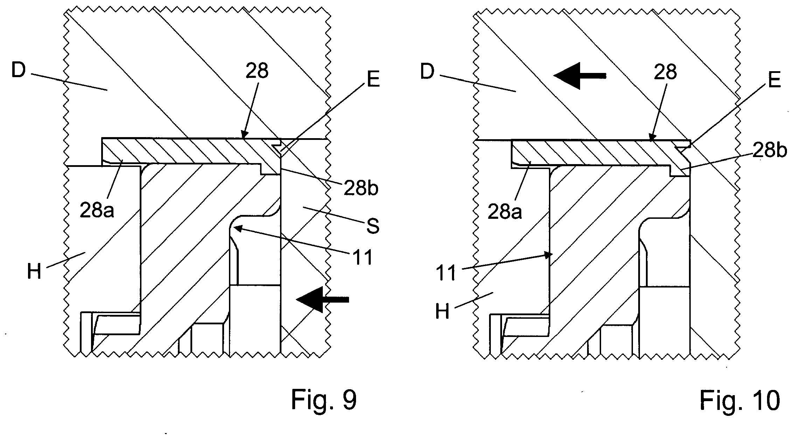

Der Sicherungsbereich 28b kann an dem - bezüglich der Bewegung des Dorns D - vorauseilenden Ende der Gleitlagerbuchse 28 ausgebildet werden. Hierzu wird das erste Beschlagteil 11 im oben genannten ersten Schritt zwischen dem Halter H und einem Gegenhalter G eingespannt. Die Gleitlagerbuchse 28 wird im oben genannten zweiten Schritt so weit eingepresst, dass am nacheilenden Ende der Überstand 28a und am vorauseilenden Ende ein weiterer Überstand entsteht (Fig. 7). Das Material dieses weiteren Überstands wird dann in einem dritten Schritt umgeformt, indem es radial nach außen gedrängt wird, beispielsweise mittels eines Stempels S, welcher anstelle des Gegenhalters G vorgesehen und relativ zum Dorn D bewegt wird, während der Halter H und der Dorn D relativ zueinander unbewegt bleiben. Durch das Umformen entsteht der Sicherungsbereich 28b (Fig. 8). Vorzugsweise ist am Stempel S ein Schnittelement E ausgebildet (Fig. 9). Das Schnittelement E läuft in Umfangsrichtung wenigstens abschnittsweise um, und zwar vom Dorn D beabstandet. Das Schnittelement E erleichtert die Ausbildung des Sicherungsbereichs 28b, indem es sich in die Gleitlagerbuchse 28 einschneidet und mittels seiner Schrägfläche Material radial nach außen drängt.

Alternativ kann der Sicherungsbereich 28b an dem - bezüglich der Bewegung des Dorns D - nacheilenden Ende der Gleitlagerbuchse 28 ausgebildet werden. Gegenüber dem Halter H bewegt sich der Dorn D entgegengesetzt zu der in Fig. 7 dargestellten Richtung. Dabei sind zwei Varianten möglich. In der einen Variante (Fig. 10) wird der Sicherungsbereichs 28b nachträglich ausgebildet. Die Gleitlagerbuchse 28 wird im oben genannten zweiten Schritt mittels des Dorns D so weit eingepresst, dass am voreilenden Ende der Überstand 28a und am nacheilenden Ende ein weiterer Überstand entsteht. Der zweite Schritt endet beispielsweise, wenn der Überstand 28a in Anlage an den Halter H gelangt, so dass die Bewegung der Gleitlagerbuchse 28 beendet ist. Das Material des weiteren Überstands am nacheilenden Ende wird dann in einem dritten Schritt (welcher sich nahtlos an den zweiten Schritt anschließt) umgeformt, indem es radial nach außen gedrängt wird, so dass der Sicherungsbereich 28b entsteht. Bevorzugt ist, dass der Dorn D seine Bewegung fortsetzt, der Halter H aber die Gleitlagerbuchse 28 abstützt. Am Dorn D ist eine Umformkontur ausgebildet, vorzugsweise ein Schnittelement E (Fig. 10). Entsprechend zu der Ausführung von Fig. 9 läuft das Schnittelement E in Umfangsrichtung wenigstens abschnittsweise um. Das Schnittelement E schneidet sich in die Gleitlagerbuchse 28 ein und drängt mittels seiner Schrägfläche Material radial nach außen, um den Sicherungsbereich 28b auszubilden. Die ringförmige Vertiefung 11b kann als Gegenstempel dienen. In Abwandlungen hierzu wird der Sicherungsbereich 28b mittels eines separaten Stempels, eines Schlages, Taumelnieten o.ä. ausgebildet. Die verschiedenen, beschriebenen Schritte können auch zu einem oder mehreren Schritten kombiniert sein.

In der anderen Variante (Fig. 11) ist der Sicherungsbereich 28b bereits vor dem Einpressen an der Gleitlagerbuchse 28 vorgebildet. Soweit der Sicherungsbereich 28b vor dem Einpressen nur vorgebildet ist, wird die Gleitlagerbuchse 28 im zweiten Schritt eingepresst bis am voreilenden Ende der Überstand 28a und am nacheilenden Ende ein weiterer Überstand entsteht (Fig. 11), wenigstes bezüglich der ringförmigen Vertiefung 11b. Im dritten Schritt wird das Material des vorgebildeten Sicherungsbereichs 28b umgeformt, bis dieser fertig ausgebildet ist, d.h. radial absteht in der Art eines Bundes. Dieses Umformen kann beispielsweise wie in Fig. 10 erfolgen, indem der Halter H die Gleitlagerbuchse 28 abstützt und der Dorn D sich weiterbewegt. Der Dorn D weist hierbei eine Umformkontur auf, vorzugsweise ein Schnittelement E. Das Umformen kann beispielsweise auch mittels eines separaten Stempels erfolgen. Die ringförmige Vertiefung 11b kann als Gegenstempel dienen. Soweit der Sicherungsbereich 28b nach einer nicht zur Erfindung gehörenden Variante vor dem Einpressen bereits fertig ausgebildet ist, beispielsweise als ein (radial abstehender) Bund, wird die Gleitlagerbuchse 28 im zweiten Schritt eingepresst bis am voreilenden Ende der Überstand 28a entsteht und am nacheilenden Ende der Sicherungsbereich 28b seine Endposition erreicht, d.h. in der ringförmigen Vertiefung 11b zu liegen kommt (Endposition der Gleitlagerbuchse 28 wie in Fig. 8) oder auf der Stirnseite des ersten Beschlagteils 11 aufliegt (Fig. 12).

### Bezugszeichenliste

- 1: Fahrzeugsitz
- 3: Sitzteil
- 4: Lehne
- 5: Handrad
- 7: Antriebswelle
- 10: Beschlag
- 11: erstes Beschlagteil
- 11b: ringförmige Vertiefung
- 12: zweites Beschlagteil
- 13: Umklammerungsring
- 16: Zahnrad
- 17: Zahnkranz
- 19: Kragen
- 21: Mitnehmer
- 22: Nabe
- 23: Bohrung
- 25: Abdeckscheibe
- 25a: Aussteuernocken
- 27: Keilsegment
- 28: Gleitlagerbuchse
- 28a: Überstand
- 28b: Sicherungsbereich
- 29: Mitnehmersegment
- 35: Feder
- 35a: Endfinger
- 43: Sicherungsring
- 44: Dichtring
- 51: Sperrfeder, Sperrelement
- 51a: Grundbogen
- 51b: Lagerbogen
- 51c: Federarm
- 51d: Führungsabschnitt
- 51e: Sperrnase
- 51f: Stützfinger
- 51g: Öffnung
- 55: Verzahnung
- D: Dorn
- E: Schnittelement
- G: Gegenhalter
- H: Halter
- S: Stempel

## Patentansprüche

1. Verfahren zur Herstellung eines Fahrzeugsitz-Beschlags (10), bei dem eine Gleitlagerbuchse (28) in axialer Richtung in eine Aufnahme eines ersten Beschlagteils (11) eingepresst wird, wobei die eingepresste Gleitlagerbuchse (28) einen radial abstehenden Sicherungsbereich (28b) aufweist, **dadurch gekennzeichnet, dass** der Sicherungsbereich (28b) nach dem Einpressen ausgebildet wird, wobei der Sicherungsbereich (28b) an dem beim Einpressen vorauseilenden Ende ausgebildet wird, indem nach dem Einpressen Material der Gleitlagerbuchse (28) radial nach außen gedrängt wird.

2. Verfahren nach Anspruch 1, wobei der Sicherungsbereich (28b) an dem beim Einpressen vorauseilenden Ende ausgebildet wird, indem nach dem Einpressen Material der Gleitlagerbuchse (28) mittels eines Schnittelementes (E) radial nach außen gedrängt wird.

3. Verfahren zur Herstellung eines Fahrzeugsitz-Beschlags (10), bei dem eine Gleitlagerbuchse (28) in axialer Richtung in eine Aufnahme eines ersten Beschlagteils (11) eingepresst wird, wobei die eingepresste Gleitlagerbuchse (28) einen radial abstehenden Sicherungsbereich (28b) aufweist, **dadurch gekennzeichnet, dass** der Sicherungsbereich (28b) entweder nach dem Einpressen ausgebildet wird, wobei der Sicherungsbereich (28b) an dem beim Einpressen nacheilenden Ende ausgebildet wird, oder der Sicherungsbereich (28b) vor dem Einpressen vorgebildet wird, wobei der Sicherungsbereich (28b) an dem beim Einpressen nacheilenden Ende fertig ausgebildet wird, indem nach dem Einpressen Material der Gleitlagerbuchse (28) radial nach außen gedrängt wird.

4. Verfahren nach Anspruch 3, wobei der Sicherungsbereich (28b) an dem beim Einpressen nacheilenden Ende fertig ausgebildet wird, indem nach dem Einpressen Material der Gleitlagerbuchse (28) mittels eines Schnittelementes (E) radial nach außen gedrängt wird.

5. Verfahren nach einem der vorhergehenden Ansprüche, **dadurch gekennzeichnet, dass** der Sicherungsbereich (28b) nach dem Einpressen in einer Vertiefung des ersten Beschlagteils (11) angeordnet ist.

6. Verfahren nach einem der vorhergehenden Ansprüche, **dadurch gekennzeichnet, dass** der Sicherungsbereich (28b) nach dem Einpressen auf der Stirnseite des ersten Beschlagteils (11) aufliegt.

7. Verfahren nach einem der vorhergehenden Ansprüche, **dadurch gekennzeichnet, dass** an dem vom Sicherungsbereich (28b) abgewandten Ende der Gleitlagerbuchse (28) nach dem Einpressen ein axialer Überstand (28a) ausgebildet ist.

8. Verfahren nach einem der vorhergehenden Ansprüche, **dadurch gekennzeichnet, dass** die eingepresste Gleitlagerbuchse (28) einen Exzenter (27, 27) aufnimmt, der sich an einem zweiten Beschlagteil (12) abstützt, welches mit dem ersten Beschlagteil (11) in Getriebeverbindung steht mittels eines Zahnrades (16) und eines Zahnkranzes (17), die miteinander kämmen, und der von einem Mitnehmer (21) angetrieben umlaufend eine relative Abwälzbewegung von Zahnrad (16) und Zahnkranz (17) antreibt, wobei insbesondere ein Sperrelement (51) vorgesehen ist, welches den Exzenter (27, 27) im nicht-angetriebenen Zustand des Beschlags (10) durch Zusammenwirken mit einer am ersten Beschlagteil (11) ausgebildeten Verzahnung (55) sperrt und welches den Exzenter (27, 27) bei Antrieb durch den Mitnehmer (21) freigibt, wobei das Sperrelement (51) insbesondere auf einem axialen Überstand (28a) der Gleitlagerbuchse (28) gelagert ist.

## Claims

1. Method for producing a vehicle seat fitting (10) in which a sliding bearing bushing (28) is pressed in the axial direction into a receptacle of a first fitting part (11), wherein the pressed-in sliding bearing bushing (28) comprises a radially protruding securing region (28b), **characterized in that** the securing region (28b) is formed after the pressing-in operation, wherein the securing region (28b) is formed on the leading end during the pressing-in operation, by material of the sliding bearing bushing (28) being forced radially outward after the pressing-in operation.

2. Method according to Claim 1, wherein the securing region (28b) is formed on the leading end during the pressing-in operation, by material of the sliding bearing bushing (28) being forced radially outward by means of a cutting element (E) after the pressing-in operation.

3. Method for producing a vehicle seat fitting (10) in which a sliding bearing bushing (28) is pressed in the axial direction into a receptacle of a first fitting part (11), wherein the pressed-in sliding bearing bushing (28) comprises a radially protruding securing region (28b), **characterized in that** the securing region (28b) is formed either after the pressing-in operation, wherein the securing region (28b) is formed on the trailing end during the pressing-in operation, or the securing region (28b) is preformed before the pressing-in operation, wherein the securing region (28b) is completely formed on the trailing end during the pressing-in operation, by material of the sliding bearing bushing (28) being forced radially outward after the pressing-in operation.

4. Method according to Claim 3, wherein the securing region (28b) is completely formed on the tailing end during the pressing-in operation, by material of the sliding bearing bushing (28) being forced radially outward by means of a cutting element (E) after the pressing-in operation.

5. Method according to one of the preceding claims, **characterized in that** the securing region (28b) is arranged in a recess of the first fitting part (11), after the pressing-in operation.

6. Method according to one of the preceding claims, **characterized in that** the securing region (28b) bears against the front face of the first fitting part (11), after the pressing-in operation.

7. Method according to one of the preceding claims, **characterized in that** an axial overlap (28a) is formed on the end of the sliding bearing bushing (28) remote from the securing region (28b), after the pressing-in operation.

8. Method according to one of the preceding claims, **characterized in that** the pressed-in sliding bearing bushing (28) receives an eccentric (27, 27) which is supported on a second fitting part (12) which is in a geared connection with the first fitting part (11) by means of a gearwheel (16) and a gear ring (17) which mesh together, and said eccentric, driven in a circulating manner by a drive element (21), producing a relative rolling movement of the gearwheel (16) and gear ring (17), wherein in particular a locking element (51) is provided, said locking element locking the eccentric (27, 27) in the non-driven state of the fitting (10) by cooperation with a toothed portion (55) formed on the first fitting part (11) and which releases the eccentric (27, 27) when driven by the drive element (21), wherein the locking element (51) is mounted, in particular, on an axial overlap (28a) of the sliding bearing bushing (28).

## Revendications

1. Procédé de fabrication d'une ferrure de siège de véhicule (10), dans lequel une douille de palier lisse (28) est pressée dans la direction axiale dans un logement d'une première partie de ferrure (11), la douille de palier lisse (28) présentant une région de fixation saillant radialement (28b), **caractérisé en ce que** la région de fixation (28b) est réalisée après le pressage, la région de fixation (28b) étant réalisée au niveau de l'extrémité située en avant lors du pressage par le fait qu'après le pressage, du matériau de la douille de palier lisse (28) est repoussé radialement vers l'extérieur.

2. Procédé selon la revendication 1, dans lequel la région de fixation (28b) est réalisée au niveau de l'extrémité située en avant lors du pressage, par le fait qu'après le pressage, du matériau de la douille de palier lisse (28) est repoussé radialement vers l'extérieur au moyen d'un élément de coupe (E).

3. Procédé de fabrication d'une ferrure de siège de véhicule (10), dans lequel une douille de palier lisse (28) est pressée dans la direction axiale dans un logement d'une première partie de ferrure (11), la douille de palier lisse (28) pressée présentant une région de fixation saillant radialement (28b), **caractérisé en ce que** la région de fixation (28b) est soit réalisée après le pressage, la région de fixation (28b) étant réalisée au niveau de l'extrémité située en arrière lors du pressage, soit la région de fixation (28b) étant formée préalablement avant le pressage, la région de fixation (28b) étant réalisée sous forme finie au niveau de l'extrémité située en arrière lors du pressage, par le fait qu'après le pressage, du matériau de la douille de palier lisse (28) est repoussé radialement vers l'extérieur.

4. Procédé selon la revendication 3, dans lequel la région de fixation (28b) est réalisée sous forme finie au niveau de l'extrémité située en arrière lors du pressage, par le fait qu'après le pressage, du matériau de la douille de palier lisse (28) est repoussé radialement vers l'extérieur au moyen d'un élément de coupe (E).

5. Procédé selon l'une quelconque des revendications précédentes, **caractérisé en ce que** la région de fixation (28b) est disposée après le pressage dans un renfoncement de la première partie de ferrure (11) .

6. Procédé selon l'une quelconque des revendications précédentes, **caractérisé en ce que** la région de fixation (28b) repose après le pressage sur le côté frontal de la première partie de ferrure (11) .

7. Procédé selon l'une quelconque des revendications précédentes, **caractérisé en ce qu'**à l'extrémité de la douille de palier lisse (28) opposée à la région de fixation (28b), après le pressage, est réalisé un dépassement axial (28a).

8. Procédé selon l'une quelconque des revendications précédentes, **caractérisé en ce que** la douille de palier lisse pressée (28) présente un excentrique (27, 27) qui s'appuie au niveau d'une deuxième partie de ferrure (12) qui est en liaison de transmission avec la première partie de ferrure (11) au moyen d'une roue dentée (16) et d'une couronne dentée (17) qui s'engrènent l'une dans l'autre, et qui, entraîné par un dispositif d'entraînement (21), entraîne en circulation un mouvement de roulement relatif de la roue dentée (16) et de la couronne dentée (17), un élément de blocage (51) étant notamment prévu, lequel bloque l'excentrique (27, 27) dans l'état non entraîné de la ferrure (10) par coopération avec une denture (55) réalisée au niveau de la première partie de ferrure (11) et lequel libère l'excentrique (27, 27) lors de l'entraînement par le dispositif d'entraînement (21), l'élément de blocage (51) étant notamment supporté sur un dépassement axial (28a) de la douille de palier lisse (28).
